# EUROPEAN PATENT APPLICATION

(11) **EP 1 295 662 A1**
(43) Date of publication of application: **26.03.2003**
(21) Application number: 02256519.6
(22) Date of filing: 20.09.2002
(51) Int. Cl.: B23D 49/11, B23D 49/16, B23D 51/16

(54) **Reciprocating saw with flush blade**

(30) Priority: 20.09.2001 US 961497
(71) Applicant: TechTronic Industries Co., Ltd., Tsuen Wan, New Territories, Hong Kong (CN)
(72) Inventor: Clark, Weldon H., Jr., Liberty, SC 29657 (US)
(74) Representative: Bucks, Teresa Anne

(57) **Abstract**

A reciprocating saw (10) includes a housing (12) having an upper surface and a side surface, and a blade holder (28) supported on the end of a reciprocating saw bar (24). The blade holder (28) is adapted to support a saw blade (30) such that the resulting cutting plane (38a,38b) lies outboard of one of the housing's (12) surfaces, while a reference plane (40a,40b), orthogonal to the cutting plane (38a,38b) and intersecting a cutting edge (42a,42b) of the blade (30), lies outboard of the other of the housing's (12) surfaces. Preferably, each surface includes a flat (44,46), and the blade's (30) cutting edge (42a,42b) is supported proximate to an intersection of the planar extensions of the flats (44,46). A wobble drive assembly (70) including a single wobble plate (76) with an integral counterweight (84) advantageously permits a relatively outboard position of the saw bar (24) on the housing (12) to reduce bending moments on the bearings (90) supporting the saw bar (24).

## Description

### BACKGROUND OF THE INVENTION

### 1. Field of the Invention

The invention relates to portable power tools featuring a reciprocating, cantilevered saw blade.

### 2. Background Art

It is well known in the art that hand-held power tools featuring a reciprocating, cantilevered saw blade are advantageously used to perform rough cutting operations. Typically, the saw blade of such known reciprocating saws is mounted on a saw bar that is nominally centered within the housing, such that the saw bar reciprocates in a vertical plane that includes the longitudinal axis of the housing. In order to allow a user to perform cutting operations in relatively "hard to reach" locations, such known reciprocating saws typically employ saw blades that resiliently bend or flex in a plane normal to the blade's nominal (typically vertical) cutting plane. In this manner, for example, a saw cut can conveniently be made along an edge defined by the intersection of two generally planar surfaces by holding the saw proximate to one surface adjacent the corner and flexing the saw blade flush with the one surface.

However, because the end of such a flexed blade tends to resiliently return to its nominal cutting plane, precise placement and control of such a flexed blade and, particularly, the tip of the flexed blade, is difficult, often resulting in unintended damage to one or both surfaces adjacent to the intended cut. Accordingly, use of known reciprocating saws often involves significant surface preparation (for example, by applying shielding material to at least one surface proximate to the edge) to protect the surface from such unintended damage. Additionally, such cuts are often hard to perform because of the need to resiliently flex the blade during the cut.

In order to reduce blade flexure during edge cutting, the prior art teaches use of a blade holder or adapter on a reciprocating saw that allows the user to laterally offset the saw blade such that the nominal (vertical) cutting plane of the blade is moved toward a side surface of the saw housing. Another known saw bar/blade adapter vertically offsets the blade axis from the saw bar axis while further permitting the blade to be mounted horizontally relative to the housing, such that the blade's cutting plane is roughly tangential to the upper surface of the housing.

However, such known blade holders/adapters continue to center the offset blade either vertically or horizontally on the housing, in part because such known reciprocating saws often employ counterweighted drive assemblies that require a geometrically-centered saw bar in order to optimize the performance of certain oppositely-reciprocating counterweights in reducing tool vibration during use. By way of example, known reciprocating saws often employ an annular or U-shaped counterweight that is reciprocated about the same longitudinal axis as the saw bar, thereby requiring relatively central positioning of the saw bar axis within the housing. As a result, the cutting edge of the offset blade is likewise roughly centered with respect to a vertical or horizontal dimension of the housing, thereby rendering more difficult cuts, for example, into corners defined by the intersection of three generally planar surfaces, and similarly implicating significant surface preparation to avoid unintended damage to adjacent surfaces.

What is needed, then, is a reciprocating saw, preferably with a geometrically-simplified drive assembly, that allows a user to perform edge- and corner-cutting operations without extensive preparation to the surface and with minimal flexing of the saw blade.

### SUMMARY OF THE INVENTION

It is an object of the invention to provide a reciprocating saw wherein the saw blade is positioned to perform edge- and corner-cutting operations with minimal flexing of the saw blade.

Another object of the invention is to provide a compact reciprocating saw featuring ease of maneuverability while cutting.

A further object of the invention is to provide a geometrically-simplified drive mechanism for a reciprocating saw which facilitates placement of the saw bar axis at a relative outboard position on the saw housing.

Under the invention, a reciprocating saw includes a housing having an upper surface and a side surface defined, for example, on a nose portion at a longitudinal end of the housing. A blade holder is mounted, for example, on the end of a projecting saw bar that is itself supported for reciprocating motion on the housing. The blade holder is adapted to support a thin saw blade having a cutting edge for reciprocation along a blade holder axis within a cutting plane. such that the cutting plane does not intersect one of the upper and side surfaces of the housing, the blade holder being further adapted to support the saw blade such that a reference plane that is orthogonal to the cutting plane and that intersects the cutting edge does not intersect the other of the upper and side surfaces of the housing.

In accordance with another feature of the invention, the housing includes at least one flat that is either generally parallel to, or is disposed at a nonzero angle with respect to, the cutting plane or the reference plane. Where the housing includes a flat on both the upper and side surfaces, the blade holder is preferably adapted to support the saw blade such that the blade's cutting edge is proximate to an intersection of the planar extensions of such flats. Further, the blade holder is preferably adapted to support the saw blade in a plurality of orientations on a plurality of mounting locations defined on the blade holder. In an exemplary embodiment, the mounting locations of the blade holder are separated by an included angle of about 90 degrees.

While the invention contemplates the use of any suitable drive mechanism whereby the saw bar and associated blade holder is reciprocated relative to the housing, an exemplary reciprocating saw includes a wobble drive assembly that employs a single wobble plate having an integrated counterweight to thereby simplify the saw bar drive mechanism while further facilitating outboard placement of the saw bar (and associated blade holder axis) relative to the saw's housing.

More specifically, in an exemplary embodiment, the wobble drive assembly has a single wobble plate that is mounted in the housing for rotation about a first wobble axis that is generally parallel to the blade holder axis. The wobble drive assembly includes a wobble plate rotatable about a second wobble axis that is canted with respect to the first wobble axis. The wobble plate has a driving end located at a radial distance from the second wobble axis that is coupled to the saw bar and is constrained to move within a wobble plane which includes the first wobble axis. Rotation of the wobble plate about the first wobble axis causes the driving end of the wobble plate to impart a reciprocating motion to the saw bar. In the exemplary embodiment, the wobble plate includes a counterweight such that the wobble plate is inertially balanced about an inertial axis extending in a direction normal to the wobble plane that intersects the wobble plane proximate to the second wobble axis.

In accordance with another feature of the invention, in order to facilitate the laterally-outboard placement of the saw bar, the wobble plane of the exemplary wobble drive assembly is canted with respect to one of the reference planes and is disposed at an acute nonzero angle with respect to the cutting plane defined by a nonflexed saw blade supported by the blade holder. By canting the wobble plane relative to one of the reference planes, an exemplary reciprocating saw in accordance with the invention beneficially features a reduced housing profile in cross-section, thereby further improving tool maneuverability and further minimizing unintended damage to adjacent surfaces during edge- and corner-cutting operations.

### BRIEF DESCRIPTION OF THE DRAWINGS

FIGURE 1 is a perspective view of an exemplary reciprocating saw in accordance with the invention, showing a saw blade supported in a first position on the blade holder;
FIGURE 2 is a perspective view of the reciprocating saw in Figure 1, showing the saw blade supported in a second position on the blade holder;
FIGURE 3 is an end view, partially broken away, of the exemplary saw illustrating the saw's wobble drive assembly;
FIGURE 4 is a partial, longitudinal section of the exemplary saw illustrating the saw's wobble drive assembly driving the saw bar to a fully-extended position;
FIGURE 5 is a partial, longitudinal section similar to that of Figure 4, illustrating the wobble drive assembly driving the saw bar to a fully-retracted position;
FIGURE 6 is a partial enlarged section of the saw bar illustrating a linear bearing and a driving end of the wobble drive assembly's wobble plate;
FIGURE 7 is a partial enlarged section similar to that of Figure 5, illustrating further detail of the wobble drive assembly; and
FIGURE 8 is an enlarged sectional view of the exemplary saw's blade holder, as otherwise illustrated in Figure 3.

### DETAILED DESCRIPTION OF THE PREFERRED EMBODIMENT

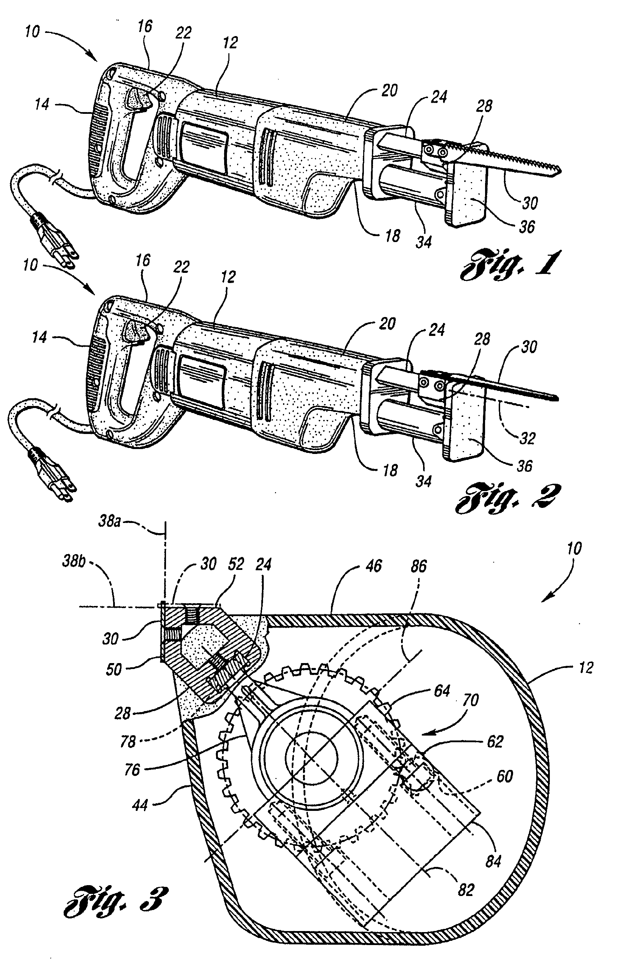

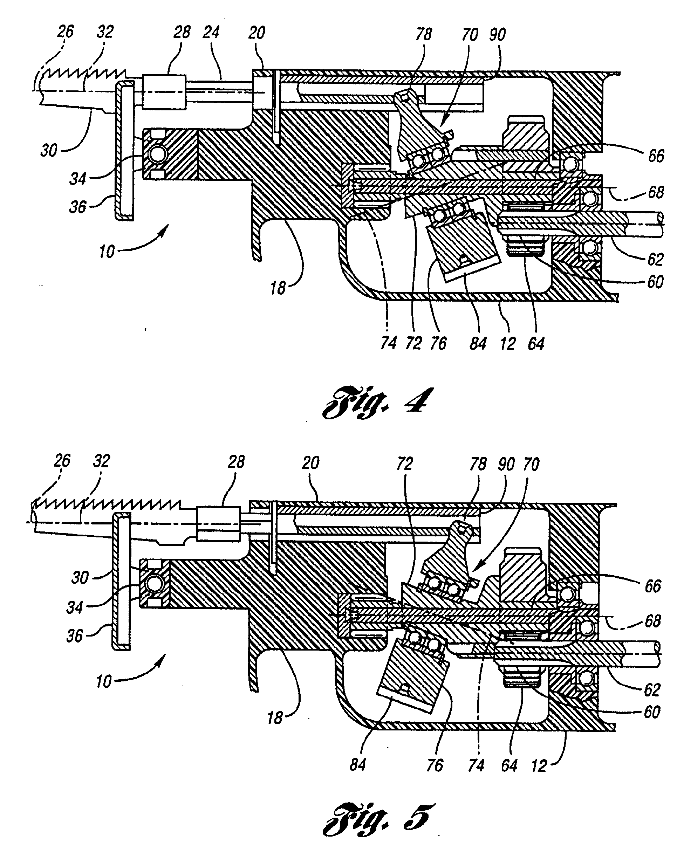

Referring to Figures 1 and 2, an exemplary, hand-held reciprocating saw 10 in accordance with the invention includes a housing 12 having a handle 14 defined proximate to one end 16, and a tapered nose portion 18 defined proximate to the other end 20. The handle 14 includes a trigger switch 22 by which to control an electric motor (not shown) fixed within the housing 12. The nose portion 18 is provided with an exterior shape which allows a user to grip the nose portion 18 during use. While the housing 12 is formed of any suitable material, in the exemplary saw 10, the housing 12 is formed of injection-molded plastic halves that are secured together in a clam shell manner.

In accordance with a feature of the invention, the exemplary saw 10 includes a saw bar 24 that projects from the nose portion 18 of the housing 12 along a longitudinal axis 26 of the housing 12. A blade holder 28 on the free end of the saw bar 24 is adapted to support a saw blade 30 in each of two blade orientations, as discussed further below, for reciprocation along a blade holder axis 32 that, in the exemplary saw 10, is also generally aligned with the longitudinal axis 26 of the saw bar 24. A shoe mount 34 also extends from the nose portion 18 of the housing 12. The shoe mount 34 is adapted to receive a shoe 36 that may be abutted against a workpiece during a cutting operation to help guide the saw 10 along the workpiece.

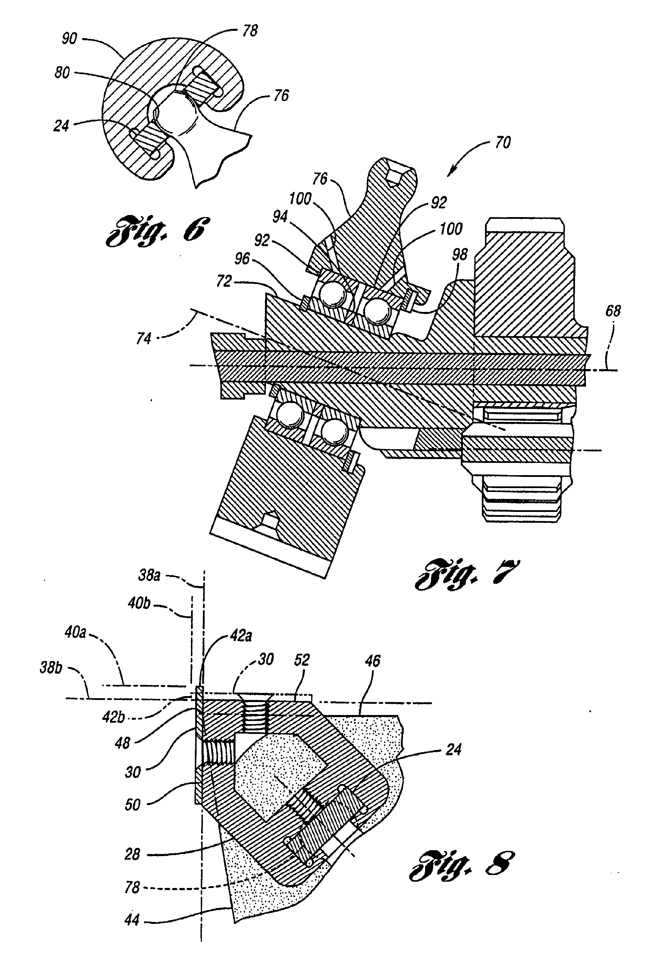

Referring to Figure 3, the blade holder 28 on the end of the saw bar 24 is adapted to support the unloaded or nonflexed saw blade 30 in such a way as to define a respective cutting plane 38a,38b, for each orientation of the blade 30 on the blade holder 28, that does not intersect the housing 12. Also as seen in Figure 3, the blade holder 28 is adapted to support the saw blade 30 such that a reference plane 40a,40b orthogonal to the cutting plane 38a,38b and intersecting a cutting edge 42a,42b defined on the saw blade 30 likewise does not intersect the outer surface of the nose portion 18 of the housing 12. In this manner, the exemplary saw 10 allows a user to easily make continuous saw cuts in "hard to reach" locations with minimal bending to the saw blade 30, thereby greatly reducing the likelihood of unintended damage to either the adjacent surfaces of the workpiece or to the saw 10.

In accordance with another feature of the invention, in order to minimize mechanical moments generated during use, the cutting plane 38a,38b and reference plane 40a,40b preferably lie proximate to, and are only slightly offset from, a respective side and top surface of the housing 12. And, as seen in Figures 3 and 8, the cutting planes 38a,38b and reference planes 40a,40b may also lie either generally parallel to, or at a nominal angle with respect to, a respective flat 44,46 defined on the housing's nose portion 18. Most preferably, where the nose portion 18 of the housing includes flats 44,46 that otherwise serve to define the outermost extent of the housing 12 in their respective directions, when viewed in cross-section in a plane normal to the housing's longitudinal axis 26, the blade holder 28 is adapted to support the saw blade 30 with the blade's cutting edge 42a,42b proximate to the nominal intersection 48 of a respective planar extension of such flats 44,46.

In accordance with another feature of the invention, while the invention contemplates use of a blade holder 28 of any suitable configuration by which to support the saw blade 30 to obtain the cutting planes 38a,38b as described above, in the exemplary saw 10, the blade holder 28 includes a pair of mounting locations 50,52 that are roughly disposed at a right angle to one another, when viewed in cross-section along the blade holder axis 32. It will be appreciated, however, that because the invention contemplates positioning the cutting edge 42a,42b of a saw blade 30 supported on one of the mounting locations 50,52 such that the adjacent mounting location does not intersect the resulting reference plane 40a,40b, the invention contemplates use of a blade holder whose correlative mounting locations are separated by an included angle that is somewhat greater than, or somewhat less than, 90 degrees. It will also be appreciated that each of the mounting locations 50,52 is preferably adapted to support the saw blade 30 with the blade's cutting edge 42a,42b in either of two diametrical positions, to thereby provide the exemplary saw 10 with even greater flexibility in use.

While the invention contemplates any suitable drive mechanism for controllably reciprocating the blade holder 28 along the blade holder axis 32, as seen in Figures 3-7, the exemplary saw 10 includes a pinion gear 60 that is suitably coupled for rotation with the armature shaft 62 of the electric motor. The pinion gear 60 drives a reducing gear 64 that is mounted on an intermediate shaft 66 for rotation about a first axis 68 that is conveniently a longitudinal axis of the housing 12 and, hence, is generally parallel to the blade holder axis 32.

A wobble drive assembly 70 is also mounted on the intermediate shaft 66. The wobble drive assembly 70 includes a wobble shaft 72 that is coupled to the reducing gear 64 for rotation about the first axis 68. The wobble shaft 72 defines a second axis 74 which is canted with respect to the first axis 68 and which rotates about the first axis 68. The wobble drive assembly 70 further includes a single wobble plate 76 rotatably supported about the wobble shaft 72 and rotatable about the second axis 74. The wobble plate 76 has a ball-shaped driving end 78 located at a radial distance from the second wobble axis 74. The driving end 78 of the wobble plate 76 is received in a complementary socket 80 defined in the saw bar 24 (as best seen in Figure 6).

Because the saw bar 24 is constrained in the housing 12 for rectilinear motion generally parallel to (or otherwise collinear with) the blade holder axis 32, the driving end 78 of the wobble plate 76 is constrained to move within a wobble plane 82 which includes the first wobble axis 68. The wobble plane 82 is best illustrated in Figure 3. Upon rotation of the wobble shaft 72 about the first axis 68, the driving end 78 of the wobble plate 76 oscillates within the wobble plane 82 to thereby impart reciprocating motion to the saw bar 24, the blade holder 28 and the supported saw blade 30.

In accordance with yet another feature of the invention, a counterweight 84 is defined on the wobble plate 76 opposite to the driving end 78. The counterweight 84 inertially balances the wobble plate 76 about an inertial axis 86 that intersects the wobble plane 82 proximate to the second axis 74. The inertial axis 86 is likewise best seen in Figure 3. Figures 4 and 5 respectively illustrate the counterweight 84 in the rearmost and foremost positions, when the saw bar 24 is respectively in the fully-extended and fully-retracted positions.

While the invention contemplates any suitable manner for mounting the counterweight 84 to wobble plate 76, or for otherwise forming the counterweight 84 integrally with the wobble plate 76 to reduce manufacturing costs, in the exemplary saw 10, the counterweight 84 is secured to the wobble plate 76 with a pair of threaded fasteners. The use of the single, counterbalanced wobble plate 76 in the wobble drive assembly 70 advantageously provides a more compact drive mechanism for the exemplary saw 10, at relatively lower cost, with the further benefit that the resulting saw 10 has improved maneuverability over known reciprocating saw designs.

As seen in Figure 6, the saw bar 24 is illustrated cooperating with the driving end 78 of the wobble plate 76. In accordance with another feature of the invention, the saw bar 24 is thin and rectangular in cross section, in contrast with conventional saw bars of generally-square or -circular cross section. The thin saw bar 24 advantageously has a lower mass than the conventional designs, so that less mass is required by the counterweight 84. A linear bearing 90 in the housing 12 slidably receives the saw bar 24 for reciprocating motion and, further, provides transverse support for the saw bar 24. The bearing 90 includes a channel providing clearance for the driving end 78 of the wobble plate 76 as it imparts the reciprocating motion to the saw bar 24. By way of example only, in the exemplary saw 10, the bearing 90 is conveniently formed of powder metal that is preferably self-lubricating to thereby reduce friction against the saw bar 24.

The wobble drive assembly 70 is illustrated in further detail in Figure 7. While the invention contemplates supporting the wobble plate 76 on the wobble shaft 72 for rotation in any suitable manner, in the exemplary saw 10, the wobble plate 76 is rotatably supported about the wobble shaft 72 by a pair of adjacent ball bearing assemblies 92 for reduced friction. The bearing assemblies 92 are spaced apart by an annular spacer 94 and retained about the wobble shaft 72 by a retaining ring 96. The wobble plate 76 is retained and axially loaded about the bearing assemblies 92 by a wave spring 98. Once assembled, the bearing assemblies 92 are fixed within the wobble plate 76 using a suitable adhesive delivered through appropriate passages 100 defined in the wobble plate.

From the foregoing, it will be appreciated that the invention provides a relatively low-cost solution that overcomes the deficiencies of known reciprocating saws with respect to edge- and corner-cutting operations.

While an exemplary embodiment of the invention has been illustrated and described, it is not intended that the above description illustrates and describes all possible forms of the invention. Rather, the words used in the specification are words of description rather than limitation, and it is understood that various changes may be made without departing from the spirit and scope of the invention.

## Claims

1. A reciprocating saw (10) comprising a housing (12) having an upper surface and a side surface; and a blade holder (28) supported on the housing (12) for reciprocating motion along a blade holder axis (32), the blade holder (28) being adapted to support a saw blade (30) having a cutting edge (42a,42b) for reciprocation in a cutting plane (38a,38b) such that the cutting plane (38a,38b) does not intersect one of the upper and side surfaces of the housing (12), the blade holder (28) being further adapted to support the saw blade (30) such that a reference plane (40a,42b) that is orthogonal to the cutting plane (38a,38b) and that intersects the cutting edge (42a,42b) does not intersect the other of the upper and side surfaces of the housing (12).

2. The reciprocating saw (10) of claim 1, wherein the housing (12) includes a first flat (44) that is generally parallel to a first one of the cutting plane (38a) and the reference plane (40a).

3. The reciprocating saw (10) of claim 1 or claim 2, wherein the housing (12) includes a second flat (46) disposed at a non-zero angle with respect to a second one of the cutting plane (38b) and the reference plane (40b).

4. The reciprocating saw (10) of any one of the preceding claims, wherein the blade holder (28) is adapted to support the cutting edge (42a,42b) of the saw blade (30) proximate to an intersection of a planar tangential extension of each of the upper and side surfaces.

5. The reciprocating saw (10) of any one of the preceding claims, wherein the blade holder (28) is adapted to support the saw blade (30) in a plurality of orientations on a plurality of mounting locations (50,52).

6. The reciprocating saw (10) of claim 5, wherein the mounting locations (50,52) of the blade holder (28) are separated by an included angle of about 90 degrees.

7. The reciprocating saw (10) of any one of the preceding claims, including a wobble drive assembly (70) mounted in the housing (12) for rotation about a first wobble axis (68), the first wobble axis (68) being generally parallel to the blade holder axis (32), the wobble drive assembly (70) including a wobble plate (76) rotatable about a second wobble axis (74) that is canted with respect to the first wobble axis (68), the wobble plate (76) having a driving end (78) located at a radial distance from the second wobble axis (74) and constrained to move within a wobble plane (82) which includes the first wobble axis (68); and a saw bar (24) supporting the blade holder (28) and coupled to the driving end (78) of the wobble plate (76), whereby rotation of the wobble plate (76) about the first wobble axis (68) causes the driving end (78) of the wobble plate (76) to impart reciprocating motion to the saw bar (24).

8. The reciprocating saw (10) of claim 7, wherein the cutting plane is disposed at a predetermined non-zero angle with respect to the wobble plane (82).

9. The reciprocating saw (10) of claim 8, wherein the predetermined non-zero angle is an acute angle.

10. The reciprocating saw (10) of any one of claims 7 to 10, wherein the wobble plane (82) intersects the reference plane.

11. The reciprocating saw (10) of any one of claims 7 to 10, wherein the wobble plate (76) has an inertial axis extending in a direction normal to the wobble plane (82) that intersects the wobble plane (82) proximate to the second wobble axis (74).

12. The reciprocating saw (10) of any one of the preceding claims in which the housing (12) has a nose portion (18) proximate to a first longitudinal end (20) of the housing (12), the nose portion including said upper surface which has a first flat (44), and said side surface which has a second flat (48); and wherein the nose portion (18) of the housing (12) is disposed entirely on one side of the cutting plane (38a,38b) and on one side of the reference plane (40a,40b).

13. To reciprocating saw (10) as claimed in any one of the preceding claims in which a saw bar (24) is supported on the housing (12) for reciprocating motion along a saw bar axis; wherein the wobble drive assembly (70) further including a counterweight (84) on the wobble plate (76) opposite the driving end (78) such that a wobble plate inertial axis extending in a direction normal to the wobble plane (82) intersects the wobble plane (82) proximate to the second wobble axis (74).

14. The reciprocating saw (10) of claim 13, wherein the counterweight (84) oscillates in a manner wherein the counterweight (84) is in a rearmost position with respect to the housing (12) when the saw bar (24) is in a fully-extended position; and wherein the counterweight (84) is in a foremost position, with respect to the housing (12) when the saw bar (24) is in a fully retracted position.
